# EUROPÄISCHE PATENTSCHRIFT

(11) **EP 2 574 997 B1**
(45) Veröffentlichungstag und Bekanntmachung des Hinweises auf die Patenterteilung: **15.06.2016**
(21) Anmeldenummer: 11183292.9
(22) Anmeldetag: 29.09.2011
(51) Int. Cl.: G05B 19/045

(54) **Verfahren zur Einstellung eines Betriebszustandes**
Method for adjusting an operating status
Procédé de réglage d'un état de fonctionnement

(43) Veröffentlichungstag der Anmeldung: 03.04.2013
(73) Patentinhaber: Siemens Aktiengesellschaft, 80333 München (DE)
(72) Erfinder: Neidig, Jörg, 90403 Nürnberg (DE); Opgenoorth, Bernd, 90402 Nürnberg (DE); Pirker, Michael, 81827 München (DE); Seitz, Christian, 80337 München (DE)

(56) Entgegenhaltungen:
- US-A- 5 469 553
- US-A1- 2003 069 651
- US-A1- 2009 112 343
- US-A1- 2010 235 685
- US-A1- 2011 047 552
- DIETMAIR ET AL: 'Zustandsbasierte Energieverbrauchsprofile', [Online] Bd. 89, Nr. 7/8, 31 Dezember 2008, Seiten 640 - 645, XP008169041 ISSN: 1436-5006 WT WERKSTATTSTECHNIK ONLINE, SPRINGER-VDI-VERL / VDI VEREIN DEUTSCHER INGENIEURE, DE Gefunden im Internet: <URL:http://www.werkstattstechnik.de/wt/art icle.php?data[article_id]=43180>

## Beschreibung

Die Erfindung betrifft ein Verfahren zur Einstellung eines Betriebszustandes einer mehrere Komponenten umfassenden Anlage, ein Computerprogrammprodukt sowie eine Verwendung eines Gesamtbetriebszustandsmodells.

Gegenwärtig ist eine Weiterentwicklung von verfügbaren Betriebszuständen für elektronische Geräte aller Art im Gange, durch welche die bislang auf »An« und »Aus« beschränkten Betriebszustände um weitere Varianten ergänzt werden.

Bekannte weitere Varianten von Betriebszuständen umfassen beispielsweise einen Ruhzustand, in der Fachwelt auch als »Hibernation« bekannt, einen Leerlaufzustand, in der Fachwelt auch als »Idle« bekannt sowie einen Bereitschaftsbetrieb, in der Fachwelt auch als »Standby« bekannt. Darüber hinaus sind weitere Betriebszustände bekannt, durch welche ein Produktivbetrieb eines elektronischen Geräts vorübergehend ausgesetzt wird, welcher in Folge mit kürzeren Vorbereitungen oder Wartezeiten wieder aktiviert werden kann, als dies durch einen Betriebszustandswechsel aus dem Betriebszustand »Aus« möglich wäre.

Auch in Komponenten von Produktions- und Fertigungsanlagen, im Folgenden Anlagen, welche in heutigen Ausführungen immer auch einen elektronischen Rechner umfassen, werden im Zuge eines gesteigerten Augenmerks auf den Energieverbrauch der Komponenten zunehmend erweiterte Betriebszustände implementiert. Unter Komponenten sind beispielsweise Prozessierungsgeräte oder Roboter einer Fertigungslinie, aber auch Einrichtungen wie Förderbänder, Motoren zu verstehen, welche häufig über eine zumindest minimale elektronische Steuerung sowie über eine mehr oder weniger ausgeprägte Kommunikationsschnittstelle zum Austausch von Prozess- und Betriebsdaten verfügen.

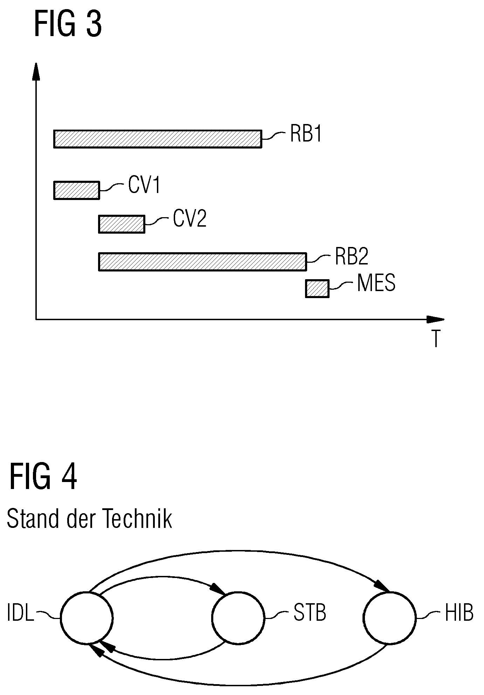

In Figur 4 ist ein Betriebszustandsmodell in Form eines Zustandsautomaten dargestellt, durch den ein Energiemanagement auf Komponentenebene durch Vorsehung von Betriebszuständen realisiert wird. Ein am linken Rand des Betriebszustandsmodells angeordneter Kreis symbolisiert einen ersten Betriebszustand IDL oder »Idle« der Komponente, ein in der Mitte angeordneter Kreis symbolisiert einen zweiten Betriebszustand STB oder »Standby« der Komponente und ein am äußersten rechten Ende angeordneter Kreis symbolisiert einen dritten Betriebszustand HIB oder »Hibernate« der Komponente.

Jeder Betriebszustand HIB, IDL, STB im Betriebszustandsmodell ist mit einer - nicht dargestellten - Parametermenge versehen. Innerhalb dieser Parametermenge können beispielsweise Zeiträume definiert werden, welche angeben, wie lange ein jeweiliger Betriebszustand mindestens bzw. maximal eingehalten werden darf. Zwischen den einzelnen Betriebszuständen HIB, IDL, STB sind durch gekrümmte Pfeile Betriebszustandswechsel symbolisiert. So ist ein Betriebszustandswechsel vom ersten Betriebszustand IDL in den zweiten Betriebszustand STB möglich, vom zweiten Betriebszustand STB in den dritten Betriebszustand HIB jedoch nicht. Jeder Zustandswechsel benötigt eine gewisse Zeitdauer, welche ebenfalls durch das Betriebszustandsmodell definierbar ist.

Ein Betriebszustandsmodell entsprechend oder analog zu Figur 4 ist beispielsweise nach dem Standard PROFIEnergy auch für ein Energiemanagement einer einzelnen Komponente einer Anlage vorgesehen. Der Standard PROFIenergy stellt des Weiteren eine Schnittstelle zu PROFINET zur Verfügung. PROFINET (Process Field Network) ist ein offener Standard zur Anwendung von Industrial Ethernet für die Automatisierung. Über die besagte Schnittstelle kann ein Betriebszustandswechsel von einzelnen Komponenten einer Anlage herbeigeführt werden.

Die Definition eines Betriebszustandswechsels für eine einzelne Komponente lässt indes das Problem ungelöst, wie ein Betriebszustandswechsel einer aus einer Mehrzahl von Komponenten bestehenden Anlage herbeizuführen ist.

Gerade die komplexe Abhängigkeit der Komponenten untereinander stellt jedoch eine große Herausforderung bei einem Herunterfahren und Hochfahren oder, allgemein, bei einem Wechsel eines Betriebzustands von Anlagen dar. Die Reihenfolgebetrachtungen von Komponenten in einer Anlage müssen derzeit manuell erfolgen. Um die Abhängigkeiten einer Anlage zu identifizieren, existiert bisher keine automatische Unterstützung, so dass auch dieser Schritt manuell durchgeführt werden muss.

Aus der US 2009/112343 A1 ist ein Rahmen für automatische Erzeugung einer Reihenfolge von Operationen bekannt. Aus der US 5 469 553 A ist eine Software-Zustandsmaschine bekannt, die ereignisgesteuert ist und den Energieverbrauch reduziert. Der Artikel von A. Dietmair, u.a., "Zustandsbasierte Energieverbrauchsprofile", wt Werkstattstechnik online, Jahrgang 98 (2008) Heft 7/8, Seite 640 bis Seite 645) erläutert Betriebszustände eines Maschinenmodells einer Fräsmaschine.

Aufgabe der Erfindung ist es, ein Verfahren bereitzustellen, welches einen automatischen Betriebszustandswechsel einer aus einer Mehrzahl von Komponenten bestehenden Anlage unterstützt.

Eine Lösung der Aufgabe erfolgt hinsichtlich ihres Verfahrensaspekts durch ein Verfahren mit den Merkmalen des Patentanspruchs 1. Eine Lösung der Aufgabe erfolgt weiterhin durch ein Computerprogrammprodukt mit den Merkmalen des Patentanspruchs 9, durch eine Verwendung in einem Prozesssteuerungssystem mit den Merkmalen des Patentanspruchs 10 sowie durch eine Verwendung in einer Komponente mit den Merkmalen des Patentanspruchs 11

Im erfindungsgemäßen Verfahren zur Einstellung eines Betriebszustandes einer mehrere Komponenten umfassenden Anlage sind folgende Schritte vorgesehen:
- Ermittlung einer strukturellen Abhängigkeit mindestens einer Komponente der Anlage durch Auswertung eines Strukturmodells;
- Ermittlung eines Betriebszustandwechselverhaltens mindestens einer Komponente der Anlage durch Auswertung eines Betriebszustandsmodells;
- Ermittlung einer prozessualen Abhängigkeit mindestens einer Komponente der Anlage durch Auswertung eines Prozessmodells;
- Erstellung eines Gesamtbetriebszustandsmodells der Anlage auf Grundlage der strukturellen und der prozessualen Abhängigkeiten sowie des Betriebszustandwechselverhaltens mindestens einer Komponente, wobei das Gesamtbetriebszustandsmodell ein zeitliches Verhalten mindestens einer Komponente bei einem Wechsel des Betriebszustands der Anlage vorgibt.

Die Reihenfolge der ersten drei Ermittlungsschritte ist im Übrigen vollkommen beliebig, so dass die Ermittlung der strukturellen Abhängigkeit, die Ermittlung des Betriebszustandwechselverhaltens und die Ermittlung der prozessualen Abhängigkeit auch in einer anderen als der dargestellten Reihenfolge erfolgen kann.

Die Erfindung basiert auf mindestens einem Strukturmodell, mindestens einem Prozessmodell sowie auf einem Betriebszustandsmodell, welches in idealer jedoch nicht notwendiger Weise für nahezu jede Komponente einer Anlage vorliegt.

Das Strukturmodell und das Prozessmodell berücksichtigen strukturelle Abhängigkeiten zwischen den Komponenten der Anlage, welche z.B. über den mechanischen Aufbau oder den realisierten Prozess gegeben sind. So hängt bspw. eine Maschine von einer Zulieferung von einem Förderband ab. Würde die Maschine abgeschaltet ohne vorher das Förderband abzuschalten, würde eine Überproduktion unfertiger Produkte erfolgen. Wird ein Aktor über eine Baugruppe angesteuert, so führt das Ausschalten der Baugruppe natürlich zu einem Funktionsstop des Aktors.

Das Strukturmodell kann beispielsweise aus einem Engineering Tool wie z.B. COMOS abgeleitet werden, welches Elektropläne, Rohrleitungspläne, Anlagenaufbau etc. enthält.

Das Prozessmodell enthält generische Regeln für eine Abschaltung oder für andere Betriebszustandsübergänge. Diese Regeln haben z.B. folgenden Inhalt: »Bei einer Sequenz von Förderbändern erfolgt eine Abschaltung immer in der Reihenfolge des Guttransports« oder »Komponenten mit externer Kühlung müssen zuletzt abgeschaltet werden« usw.

Das Betriebszustandsmodell, welches vorzugsweise in einer semantischen Beschreibungssprache strukturiert ist, beinhaltet mögliche Betriebszustände sowie vorzugsweise eine Angabe zum Energieverbrauch eines jeweiligen Betriebszustandes. Darüber hinaus enthält das Betriebszustandsmodell vorzugsweise Angaben zur benötigten Zeitdauer eines Wechsels von einem bestimmten Betriebszustand in einen bestimmten anderen Betriebszustand.

Aus den vorgenannten Modellen wird das Gesamtbetriebszustandsmodell erstellt. Dieses Gesamtbetriebszustandsmodell spiegelt sämtliche zeitlichen Abhängigkeiten für das Abschalten wider. Auf Basis des Abhängigkeitsgraphen kann eine optimale Abschaltreihenfolge einzelner Komponenten oder ein beliebiger anderer Betriebszustandswechsel einzelner Komponenten bei einem Herunterfahren oder bei einem Betriebszustandswechsel der Gesamtanlage bestimmt werden.

Die erfindungsgemäße Erstellung eines Gesamtbetriebszustandsmodells der Anlage erfolgt beispielsweise durch Bildung eines Abhängigkeitsgraphen des Fertigungsprozesses der Anlage hinsichtlich sämtlicher Sub-Fertigungsprozesse, wobei der Abhängigkeitsgraph zeitliche Abhängigkeiten für einen Betriebszustandswechsel der gesamten Anlage widerspiegelt. Auf Basis dieses Gesamtbetriebszustandsmodells bzw. Abhängigkeitsgraphen ist eine optimale Reihenfolge für Betriebszustandswechsel einzelner Komponenten bei einem gewünschten Betriebszustandswechsel der Anlage bestimmbar.

Mit Anwendung des erfindungsgemäßen Verfahrens ist ein Anlagenplaner in vorteilhafter Weise von der bislang bestehenden Bürde befreit, ein Anlagenmodell gänzlich manuell zu erstellen. Stattdessen ist lediglich eine Modellierung von Abhängigkeiten zwischen den Komponenten erforderlich. Dies beschleunigt den Engineering-Prozess in erheblichem Maße.

Vorteilhafte Weiterbildungen der Erfindung sind Gegenstand der Unteransprüche.

In vorteilhafter Weise enthält mindestens ein komponentenbasiertes Betriebszustandsmodell eine Angabe eines Energieverbrauchs für mindestens einen Betriebszustand der Komponente. Diese Ausgestaltung der Erfindung gestattet eine Bestimmung eines hinsichtlich des Energieverbrauchs der Anlage optimalen Betriebszustandes bei einer gegebenen Auslastung bzw. bei einem Leerlauf der Anlage.

Eine weitere vorteilhafte Ausgestaltung des erfindungsgemäßen Verfahrens sieht vor, dass aus dem erstellten Gesamtbetriebszustandsmodell ein modifiziertes Gesamtbetriebszustandsmodell derart bestimmt wird, indem aus dem erstellten Gesamtbetriebszustandsmodell optimale Zustandsübergänge bestimmt werden und diese als reduzierter Zustandsgraph im modifizierten Gesamtbetriebszustandsmodell berücksichtigt werden.

Diese Fortbildung des Verfahrens basiert auf der Erkenntnis, dass das erstellte Gesamtbetriebszustandsmodell eventuell nur eine erste Arbeitsbasis ist, welche durch Optimierungen verbessert werden kann. Häufig wird das entstandene Gesamtbetriebszustandsmodell zu viele Freiheitsgrade nutzen, da nicht alle Einschränkungen explizit modelliert wurden. Das heißt der Anlagenplaner möchte die im Gesamtbetriebszustandsmodell vorgesehenen Möglichkeiten zum Betriebszustandswechsel weiter einschränken. Diese Einschränkung erfolgt durch die Bestimmung optimaler Zustandsübergänge. Das modifizierte Gesamtbetriebszustandsmodell wird nach dieser Modifikation optional an der Anlage oder an einem Modell der Anlage verifiziert und somit neue optimale Betriebszustandswechsel ermittelt. Das Verfahren gemäß dieser Ausgestaltung wird gegebenenfalls mehrmals wiederholt und kann im Verlauf auch zu einer Modifikation der Prozess- und/oder Strukturmodelle führen. Ein solcher iterative Ansatz gewährleistet somit eine permanente Verbesserung des Prozesses.

Die Betriebszustandswechsel der Anlage unter Anwendung des Gesamtbetriebszustandsmodells können entweder zentral, d.h. an einem Prozesssteuerungssystem bzw. »Manufacturing Execution System«, oder auch dezentral, d.h. an einer einzelnen Komponente in Zusammenarbeit mit anderen Komponenten gesteuert werden.

Auch die erfindungsgemäße Ermittlung des Gesamtbetriebszustandsmodells kann zentral oder dezentral erfolgen.

In einem zentralen Ansatz werden die jeweiligen Prozess- und/oder Strukturmodelle sowie Betriebszustandsmodelle an ein zentrales System übermittelt, um anschließend eine zentrale Auswertung durchzuführen. In diesem Fall kann das zentrale System mit Engineering Tools zusammenarbeiten.

Im Falle eines dezentralen Ansatzes ist die Auswertung auf mehrere Prozessschritte bzw. Komponenten verteilt. Dies ist insbesondere dann eine vorteilhafte Variante, wenn jede Komponente eine eigene Datenverarbeitungsmöglichkeit sowie Kommunikationseinheit besitzt.

Ein Ausführungsbeispiel mit weiteren Vorteilen und Ausgestaltungen der Erfindung wird im Folgenden anhand der Zeichnung näher erläutert.

Dabei zeigen:
- Fig. 1:: ein Strukturbild zur schematischen Darstellung eines Gesamtbetriebszustandsmodells einer Anlage;
- Fig. 2:: ein Strukturbild zur schematischen Darstellung einer aus einzelnen Komponenten bestehenden Anlage;
- Fig. 3:: ein Ablaufdiagramm zur schematischen Darstellung einer Zeitabhängigkeit von Betriebszustandsänderungen einzelner Komponenten; und;
- Fig. 4:: ein Strukturbild zur schematischen Darstellung eines bekannten Betriebszustandsmodells einer einzelnen Komponente;

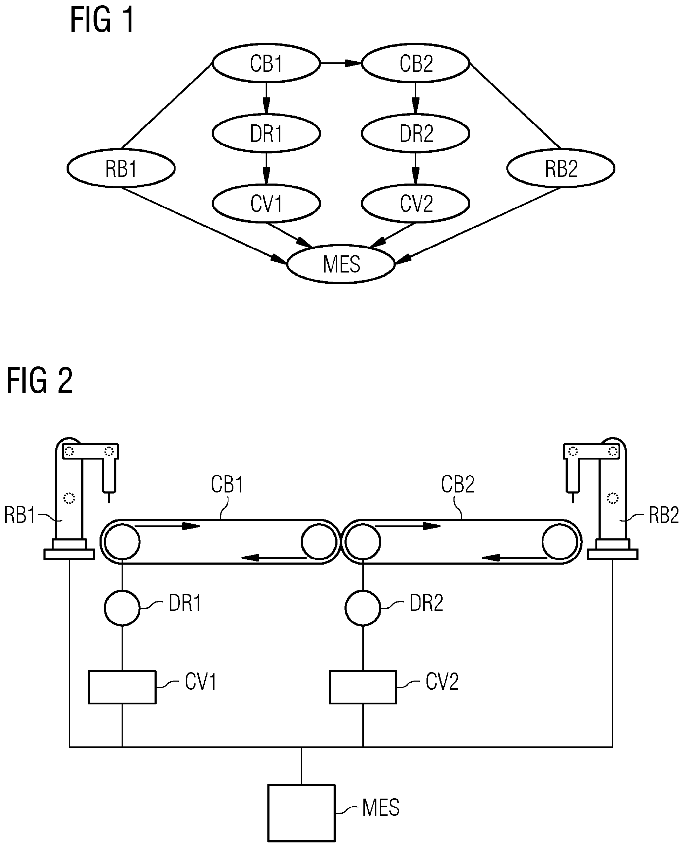

Figur 2 zeigt einen exemplarischen Ausschnitt einer aus mehreren Komponenten bestehenden Anlage, darunter ein erster Roboter RB1, ein zweiter Roboter RB2, ein erstes Förderband CB1, ein zweites Förderband CB2, ein erster Motor DR1, ein zweiter Motor DR2, ein erster Umrichter CV1, ein zweiter Umrichter CV2 sowie ein Prozesssteuerungssystem MES.

Zur erfindungsgemäßen Erstellung eines Gesamtbetriebszustandmodells der Anlage wird gemäß einem Ausführungsbeispiel wie folgt vorgegangen.

In einem ersten Schritt erfolgt eine Ermittlung einer strukturellen Abhängigkeit zwischen Komponenten der Anlage durch Auswertung eines oder mehrerer Strukturmodelle. Hierbei wird in idealer Weise die strukturelle Abhängigkeit derjenigen Komponenten ermittelt, welche für einen Betriebszustandswechsel der Anlage eine Rolle spielen.

Eine solche strukturelle Abhängigkeit wird beispielsweise aus einem für die Automatisierungsplanung der Anlage erstellten Projektmodell ermittelt. Aus diesem Projektmodell geht beispielsweise hervor, dass das Steuerungssystem MES über den Kommunikationsstandard PROFINET mit den Robotern RB1, RB2 und den Umrichtern CV1, CV2 verbunden ist. Weiterhin geht beispielsweise aus Stromlaufplänen hervor, dass die Motoren DR1, DR2 mit den Umrichtern CV1, CV2 verbunden sind.

In einem zweiten Schritt erfolgt eine Ermittlung eines Betriebszustandswechselverhaltens mindestens einer Komponente der Anlage durch eine Auswertung eines Betriebszustandsmodells der jeweiligen Komponente. Aus den in den einzelnen Komponenten hinterlegten Betriebszustandsmodellen, welche beispielsweise analog zur Figur 4 vorliegen, werden unter anderem Abschaltbedingungen ausgelesen, welche beispielsweise eine Dauer eines Abschaltvorgangs, eine Dauer eines Einschaltvorgangs sowie eine minimale und maximale Abschaltzeit definieren. Wie bereits erwähnt, werden im Betriebszustandsmodell auch über die Betriebszustände »An« und »Aus« berücksichtigt, wie z.B. ein Leerlaufzustand, einen Bereitschaftsbetrieb usw.

In einem dritten Schritt erfolgt eine Ermittlung einer prozessualen Abhängigkeit durch Auswertung eines Prozessmodells. Hierzu wird beispielsweise eine formale Prozessbeschreibung ausgewertet, aus der hervorgeht, dass die Komponenten RB1, RB2 Roboter RB1, RB2 sind und dass die Motoren DR1, DR2 die Förderbänder CB1, CB2 antreiben. Ferner wird ermittelt, dass ein zu prozessierendes Prozessgut die besagten Komponenten RB1, CB1, CB2, RB2 in dieser Reihenfolge durchläuft.

Im Prozessmodell sind beispielsweise weiterhin generische Abschaltregeln definiert. Ein zugehöriger Datensatz enthält beispielsweise folgende Regeln:
- Die Förderbänder CB1, CB2 müssen in der Reihenfolge der Laufrichtung abgeschaltet werden;
- Die Roboter RB1, RB2 und daran angeschlossene Förderbänder CB1, CB2 können gleichzeitig abgeschaltet werden; und;
- Das Steuerungssystem MES wird zuletzt abgeschaltet.

Auf Grundlage der ermittelten strukturellen Abhängigkeiten und des Betriebszustandswechselverhaltens erfolgt nun eine Erstellung eines Gesamtbetriebszustandsmodells der Anlage, zunächst in Form eines weitgehend selbsterklärenden Abhängigkeitsgraphs gemäß Figur 1.

Mittels einer Suchstrategie auf dem in Figur 1 gezeigten Abhängigkeitsgraph wird im Folgenden eine Abschaltreihenfolge ermittelt, welcher beispielsweise an ein entsprechendes Prozesssteuerungssystem exportiert werden kann. Der Abhängigkeitsgraph wird eventuell teilweise aus einem Projektierungswerkzeug importiert.

Als Ergebnis der Ermittlung der Abschaltreihenfolge ergibt sich ein Ablaufdiagramm mit einer in Figur 3 gezeigten Abschaltreihenfolge. In diesem Ablaufdiagramm gemäß Figur 3 ist auf einer Abszisse T die Zeit aufgetragen. Abschaltbeginn und -dauer einzelner Komponenten RB1, CV1, CV2, RB2, MES sind als jeweiliger schwarzer Balken über der Zeit T aufgetragen.

Aus dem erstellten Gesamtbetriebszustandsmodell wird in einer Ausführungsform der Erfindung ein modifiziertes Gesamtbetriebszustandsmodell bestimmt, welches unter erneuter Bezugnahme auf Figur 1 erläutert wird. Bei der Erstellung des modifizierten Gesamtbetriebszustandsmodell werden aus dem erstellten Gesamtbetriebszustandsmodell optimale Zustandsübergänge bestimmt und nur diese im modifizierten Gesamtbetriebszustandsmodell berücksichtigt. Die Bestimmung optimaler Zustandsübergänge erfolgt beispielsweise mit den Mitteln einer Knotenreduktion.

Figur 1 zeigt den besagten Abhängigkeitsgraph für einen Betriebszustandswechsel von Komponenten der Anlage. Mit anderen Worten enthält der Abhängigkeitsgraph als Knotenmenge die vorhandenen Komponenten der Anlage. Im Graph gibt es zwischen zwei Knoten u und v eine ungerichtete Kante, wenn beide Knoten u und v gleichzeitig abgeschaltet werden können. Beide binären Relationen werden zu einer Beziehung u ≤ v zusammengefasst. Die binäre Relation u ≤ v ist transitiv. Aufgrund dieser Eigenschaft kann die Kantenmenge reduziert werden.

## Patentansprüche

1. Verfahren zur Einstellung eines Betriebszustandes (IDL, STB, HIB), insbesondere der Betriebszustände "idle" (IDL), "standby" (STB) und "hibernate" (HIB), einer mehrere Komponenten (RB1, RB2, CB1, CB2, DR1, DR2, CV1, CV2, MES) umfassenden Anlage, umfassend folgende Schritte:
- Ermittlung einer strukturellen Abhängigkeit mindestens einer Komponente (RB1, RB2, CB1, CB2, DR1, DR2, CV1, CV2, MES) der Anlage durch Auswertung eines Strukturmodells;
- Ermittlung eines Betriebszustandswechselverhaltens mindestens einer Komponente (RB1, RB2, CB1, CB2, DR1, DR2, CV1, CV2, MES) der Anlage durch Auswertung eines Betriebszustandsmodells;
- Ermittlung einer prozessualen Abhängigkeit mindestens einer Komponente (RB1, RB2, CB1, CB2, DR1, DR2, CV1, CV2, MES) der Anlage durch Auswertung eines Prozessmodells, welches generische Regeln für Betriebszustandsübergänge enthält;
- Erstellung eines Gesamtbetriebszustandsmodells der Anlage auf Grundlage der strukturellen und der prozessualen Abhängigkeiten sowie des Betriebszustandswechselverhaltens mindestens einer Komponente (RB1, RB2, CB1, CB2, DR1, DR2, CV1, CV2, MES), um eine optimale Reihenfolge eines Betriebszustandswechsels einzelner Komponenten für den gewünschten einzustellenden Betriebszustand der Anlage zu ermitteln, wobei das Gesamtbetriebszustandsmodell ein zeitliches Verhalten (T) mindestens einer Komponente (RB1, RB2, CB1, CB2, DR1, DR2, CV1, CV2, MES) bei einem Wechsel des Betriebszustands der Anlage vorgibt,
**dadurch gekennzeichnet,**
**dass** das Betriebszustandsmodell eine Angabe eines Energieverbrauchs für mindestens einen Betriebszustand (IDL, STB, HIB) der Komponente (RB1, RB2, CB1, CB2, DR1, DR2, CV1, CV2, MES) enthält sowie eine zeitliche Dauer (T) für mindestens einen Betriebszustandswechsel der Komponente (RB1, RB2, CB1, CB2, DR1, DR2, CV1, CV2, MES) definiert.

2. Verfahren nach Anspruch 1, **dadurch gekennzeichnet, dass** das Betriebszustandsmodell mindestens einen für diese Komponente (RB1, RB2, CB1, CB2, DR1, DR2, CV1, CV2, MES) möglichen Betriebszustand (IDL, STB, HIB) definiert.

3. Verfahren nach einem der vorhergehenden Ansprüche, bei dem ein Betriebszustandswechsel der Anlage zentral, insbesondere an einem Prozesssteuerungssystem (MES), oder dezentral, insbesondere an einer einzelnen Komponente (RB1, RB2, CB1, CB2, DR1, DR2, CV1, CV2, MES) in Zusammenhang mit andere Komponenten (RB1, RB2, CB1, CB2, DR1, DR2, CV1, CV2, MES) gesteuert wird.

4. Verfahren nach einem der vorgenannten Ansprüche, **dadurch gekennzeichnet, dass** das Strukturmodell ein strukturelles Zusammenwirken einer Komponente (RB1, RB2, CB1, CB2, DR1, DR2, CV1, CV2, MES) mit mindestens einer weiteren Komponente (RB1, RB2, CB1, CB2, DR1, DR2, CV1, CV2, MES) abbildet.

5. Verfahren nach einem der vorgenannten Ansprüche, **dadurch gekennzeichnet, dass** das Prozessmodell eine Prozessabhängigkeit einer Komponente (RB1, RB2, CB1, CB2, DR1, DR2, CV1, CV2, MES) mit mindestens einer weiteren Komponente (RB1, RB2, CB1, CB2, DR1, DR2, CV1, CV2, MES) abbildet.

6. Verfahren nach einem der vorgenannten Ansprüche, **dadurch gekennzeichnet, dass** aus dem erstellten Gesamtbetriebszustandsmodells ein modifiziertes Gesamtbetriebszustandsmodell derart bestimmt wird, indem aus dem erstellten Gesamtbetriebszustandsmodell optimale Zustandsübergänge bestimmt werden und nur diese im modifizierten Gesamtbetriebszustandsmodell berücksichtigt werden.

7. Verfahren nach einem der vorgenannten Ansprüche,
**dadurch gekennzeichnet, dass** aus dem Gesamtbetriebszustandsmodell eine Betriebszustandswechselreihenfolge mindestens einer Komponente der Anlage bei einem vorgebbaren Betriebszustandswechsel der Anlage ermittelt wird.

8. Verfahren nach einem der vorgenannten Ansprüche, bei der ein Betriebszustand (IDL, STBY, HIB) dadurch charakterisiert ist, dass ein Produktivbetrieb eines elektronischen Geräts vorübergehend ausgesetzt wird, welcher in Folge mit kürzeren Vorbereitungen oder Wartezeiten wieder aktiviert werden kann, als dies durch einen Betriebszustandswechsel aus dem Betriebszustand "AUS" möglich wäre.

9. Computerprogrammprodukt mit Mitteln zur Durchführung des Verfahrens nach einem der vorhergehenden Ansprüche 1 bis 8, wenn das Computerprogrammprodukt an einem Prozessplanungssystem zur Ausführung gebracht wird.

10. Verwendung eines Gesamtbetriebszustandsmodells der Anlage nach einem der vorhergehenden Ansprüche 1 bis 8 in einem Prozesssteuerungssystem.

11. Verwendung eines Gesamtbetriebszustandsmodells der Anlage nach einem der vorhergehenden Ansprüche 1 bis 8 in einer Komponente (RB1, RB2, CB1, CB2, DR1, DR2, CV1, CV2, MES).

## Claims

1. Method for setting an operating status (IDL, STB, HIB), especially the operating status »idle« (IDL), »standby« (STB) and »hibernate« (HIB), of a plant consisting of a multiplicity of components (RB1, RB2, CB1, CB2, DR1, DR2, CV1, CV2, MES), comprising the following steps:
- determining the structural dependency of at least one component (RB1, RB2, CB1, CB2, DR1, DR2, CV1, CV2, MES) of the plant through the analysis of a structural model;
- determining the operating status change behaviour of at least one component (RB1, RB2, CB1, CB2, DR1, DR2, CV1, CV2, MES) of the plant through the analysis of an operating status model;
- determining a process-related dependency of at least one component (RB1, RB2, CB1, CB2, DR1, DR2, CV1, CV2, MES) of the plant through the analysis of a process model, which contains generic rules for operating status transitions;
- determining an overall operating status model of the plant based on the structural and process-related dependencies and the operating status change behaviour of at least one component (RB1, RB2, CB1, CB2, DR1, DR2, CV1, CV2, MES) in order to determine an optimal sequence for the operating status change of individual components for the desired operating status of the plant to be set, wherein the overall operating status model prescribes a temporal behaviour (T) of at least one component (RB1, RB2, CB1, CB2, DR1, DR2, CV1, CV2, MES) in the case of a change in the operating status of the plant,
**characterised in that**
the operating status model contains details of the energy consumption for at least one operating status (IDL, STB, HIB) of the component (RB1, RB2, CB1, CB2, DR1, DR2, CV1, CV2, MES) and defines the temporal duration (T) for at least one operating status change of the component (RB1, RB2, CB1, CB2, DR1, DR2, CV1, CV2, MES).

2. Method according to claim 1, **characterised in that** the operating status model defines at least one operating status (IDL, STB, HIB) possible for this component (RB1, RB2, CB1, CB2, DR1, DR2, CV1, CV2, MES).

3. Method according to one of the preceding claims, in which an operating status change of the plant is controlled centrally, especially on a process control system (MES), or locally, especially on an individual component (RB1, RB2, CB1, CB2, DR1, DR2, CV1, CV2, MES) in conjunction with other components (RB1, RB2, CB1, CB2, DR1, DR2, CV1, CV2, MES).

4. Method according to one of the preceding claims, **characterised in that** the structural model maps a structural interoperation of a component (RB1, RB2, CB1, CB2, DR1, DR2, CV1, CV2, MES) with at least one further component (RB1, RB2, CB1, CB2, DR1, DR2, CV1, CV2, MES).

5. Method according to one of the preceding claims, **characterised in that**
the process model maps the process dependency of a component (RB1, RB2, CB1, CB2, DR1, DR2, CV1, CV2, MES) with at least one further component (RB1, RB2, CB1, CB2, DR1, DR2, CV1, CV2, MES).

6. Method according to one of the preceding claims, **characterised in that** a modified overall operating status model is determined from the overall operating status model thus created in such a way that optimal status transitions are determined from the created overall operating status model, and only these are taken into account in the modified overall operating status model.

7. Method according to one of the preceding claims, **characterised in that** an operating status change sequence of at least one component of the plant is determined from the overall operating status model in the case of a predefinable operating status change of the plant.

8. Method according to one of the preceding claims, in which an operating status (IDL, STBY, HIB) is **characterised in that** a productive operation of an electronic device is temporarily suspended, which can subsequently be reactivated with brief preparations or delays, as would have been possible by means of an operating status change from the operating status »off«.

9. Computer program product with means for the execution of the method according to one of the preceding claims 1 to 8, when the computer program product is executed on a process planning system.

10. Use of an overall operating status model of the plant according to one of the preceding claims 1 to 8 in a process control system.

11. Use of an overall operating status model of the plant according to one of the preceding claims 1 to 8 in a component (RB1, RB2, CB1, CB2, DR1, DR2, CV1, CV2, MES).

## Revendications

1. Procédé de réglage d'un état de fonctionnement (IDL, STB, HIB), en particulier des états de fonctionnement "ralenti" (IDL), "attente" (STB) et "hibernation" (HIB) d'une installation comprenant plusieurs composants (RB1, RB2, CB1, CB2, DR1, DR2, CV1, CV2, MES), comprenant les étapes suivantes:
- détermination d'une dépendance structurelle d'au moins un composant (RB1, RB2, CB1, CB2, DR1, DR2, CV1, CV2, MES) de l'installation par exploitation d'un modèle structurel;
- détermination d'un comportement de changement d'état de fonctionnement d'au moins un composant (RB1, RB2, CB1, CB2, DR1, DR2, CV1, CV2, MES) de l'installation par exploitation d'un modèle d'état de fonctionnement;
- détermination d'une dépendance liée au processus d'au moins un composant (RB1, RB2, CB1, CB2, DR1, DR2, CV1, CV2, MES) de l'installation par exploitation d'un modèle de processus, qui contient des règles génériques pour des transitions d'état de fonctionnement;
- établissement d'un modèle d'état de fonctionnement global de l'installation sur la base des dépendances structurelles et liées au processus ainsi que du comportement de changement d'état de fonctionnement d'au moins un composant (RB1, RB2, CB1, CB2, DR1, DR2, CV1, CV2, MES), afin de déterminer une séquence optimale d'un changement d'état de fonctionnement de composants individuels pour l'état de fonctionnement désiré à régler de l'installation, dans lequel le modèle d'état de fonctionnement global prédétermine un comportement temporaire (T) d'au moins un composant (RB1, RB2, CB1, CB2, DR1, DR2, CV1, CV2, MES) lors d'un changement de l'état de fonctionnement de l'installation,
**caractérisé en ce que** le modèle d'état de fonctionnement contient une indication d'une consommation d'énergie pour au moins un état de fonctionnement (IDL, STB, HIB) du composant (RB1, RB2, CB1, CB2, DR1, DR2, CV1, CV2, MES) et définit une durée temporaire (T) pour au moins un changement d'état de fonctionnement du composant (RB1, RB2, CB1, CB2, DR1, DR2, CV1, CV2, MES).

2. Procédé selon la revendication 1, **caractérisé en ce que** le modèle d'état de fonctionnement définit au moins un état de fonctionnement (IDL, STB, HIB) possible pour ce composant (RB1, RB2, CB1, CB2, DR1, DR2, CV1, CV2, MES).

3. Procédé selon l'une quelconque des revendications précédentes, dans lequel on commande un changement d'état de fonctionnement de l'installation de façon centralisée, en particulier à un système de commande de processus (MES), ou de façon décentralisée, en particulier à un composant individuel (RB1, RB2, CB1, CB2, DR1, DR2, CV1, CV2, MES) en relation avec d'autres composants (RB1, RB2, CB1, CB2, DR1, DR2, CV1, CV2, MES).

4. Procédé selon l'une quelconque des revendications précédentes, **caractérisé en ce que** le modèle de structure représente une coopération structurelle d'un composant (RB1, RB2, CB1, CB2, DR1, DR2, CV1, CV2, MES) avec au moins un autre composant (RB1, RB2, CB1, CB2, DR1, DR2, CV1, CV2, MES).

5. Procédé selon l'une quelconque des revendications précédentes, **caractérisé en ce que** le modèle de processus représente une dépendance liée au processus d'un composant (RB1, RB2, CB1, CB2, DR1, DR2, CV1, CV2, MES) avec au moins un autre composant (RB1, RB2, CB1, CB2, DR1, DR2, CV1, CV2, MES).

6. Procédé selon l'une quelconque des revendications précédentes, **caractérisé en ce que** l'on détermine, à partir du modèle d'état de fonctionnement global établi, un modèle d'état de fonctionnement global modifié de telle manière que l'on détermine, à partir du modèle d'état de fonctionnement global établi, des transitions d'état optimales et on ne tient compte que de celles-ci dans le modèle d'état de fonctionnement global modifié.

7. Procédé selon l'une quelconque des revendications précédentes, **caractérisé en ce que** l'on détermine à partir du modèle d'état de fonctionnement global une séquence de changements d'état de fonctionnement d'au moins un composant de l'installation lors d'un changement d'état de fonctionnement prévisible de l'installation.

8. Procédé selon l'une quelconque des revendications précédentes, dans lequel un état de fonctionnement (IDL, STBY, HIB) est **caractérisé en ce que** l'on interrompt temporairement un fonctionnement de production d'un appareil électronique, qui peut de nouveau être activé à la suite de préparations plus courtes ou de temps d'attente plus courts que ce qui serait possible par un changement d'état de fonctionnement à partir de l'état de fonctionnement "ARRET".

9. Programme informatique comportant des moyens pour la mise en oeuvre du procédé selon l'une quelconque des revendications précédentes 1 à 8, lorsque le programme informatique est exécuté sur un système de planification de processus.

10. Utilisation d'un modèle d'état de fonctionnement global de l'installation selon l'une quelconque des revendications précédentes 1 à 8 dans un système de commande de processus.

11. Utilisation d'un modèle d'état de fonctionnement global de l'installation selon l'une quelconque des revendications précédentes 1 à 8 dans un composant (RB1, RB2, CB1, CB2, DR1, DR2, CV1, CV2, MES).
